# EUROPÄISCHE PATENTSCHRIFT

(11) **EP 1 373 412 B1**
(45) Veröffentlichungstag und Bekanntmachung des Hinweises auf die Patenterteilung: **28.04.2010**
(21) Anmeldenummer: 02727212.9
(22) Anmeldetag: 12.03.2002
(51) Int. Cl.: C09C 1/00

(54) **TITANDIOXID-PIGMENTZUSAMMENSETZUNG**
TITANIUM DIOXIDE PIGMENT COMPOSITION
COMPOSITION DE PIGMENTS AU DIOXYDE DE TITANE

(30) Priorität: 28.03.2001 DE 10115544
(43) Veröffentlichungstag der Anmeldung: 02.01.2004
(73) Patentinhaber: KRONOS INTERNATIONAL, INC., 51373 Leverkusen (DE)
(72) Erfinder: BENDER, Jürgen, 40789 Monheim (DE); BLÜMEL, Siegfried, 40883 Ratingen (DE); SCHMITT, Volker, 42799 Leichlingen (DE); VIELHABER-KIRSCH, Brigitte, 51491 Overath (DE)
(86) Internationale Anmeldenummer: PCT/DE2002/000863
(87) Internationale Veröffentlichungsnummer: WO 2002/077107

(56) Entgegenhaltungen:
- US-A- 3 510 335
- US-A- 4 075 031
- US-A- 5 342 485
- US-A- 5 346 546

## Beschreibung

Die Erfindung richtet sich auf eine Titandioxid-Pigmentzusammensetzung.

Von weißen Papieren wird für bestimmte Anwendungen eine hohe Opazität (ein hohes Deckvermögen), eine hohe Helligkeit bei möglichst neutralem Farbton und eine gute Vergrauungsstabilität (Lichtechtheit) gefordert. Es sind Titandioxid-Pigmente (Laminatpigmente) mit niedriger Vergrauungstendenz bekannt. Der einarbeitbare Anteil dieser Pigmente in Papiere ist aber häufig begrenzt, da bei einer zu hohen Pigmentkonzentration physikalische Papiereigenschaften, wie z. B. eine ausreichende Nassreißfestigkeit, nicht mehr den Ansprüchen genügen. Der erreichbaren Opazität sind daher mit den üblichen Pigmenten Grenzen gesetzt.

Von Titandioxid-Pigmenten, die besonders für die Herstellung von (matten) Dispersionsfarben geeignet sind, ist bekannt (US 3 510 335), dass deren Deckvermögen durch eine besondere Art der Nachbehandlung gesteigert werden kann. Sie werden relativ hoch (mindestens 5 Gew.-%) mit Silizium- und Aluminiumoxid beschichtet, wobei durch die Art der Auffällung eine möglichst voluminöse, poröse, flockige, lockere, "fluffy" Beschichtung angestrebt wird. Ihre Vergrauungsstabilität ist jedoch nicht ausreichend.

Es hat sich auch gezeigt, dass weder ein "klassisches Laminatpigment" mit einer zusätzlichen "Dispersionsfarbenpigment"-Nachbehandlung noch ein "Dispersionsfarbenpigment" mit einer zusätzlichen "Laminatpigment"-Nachbehandlung für bestimmte Anwendungen geeignet ist.

Von einem verbesserten Laminatpigment wird daher erwartet, dass bei gleicher Pigmentierungshöhe und unveränderten physikalischen Eigenschaften, insbesondere der Nassreißfestigkeit, eine höhere Opazität erzielt wird. Es ist selbstverständlich auch ein erwünschtes Ziel, wenn für eine verlangte Opazität der Pigmenteinsatz mit einem verbesserten Pigment reduziert werden kann.

Überraschenderweise löst nicht ein Einzelpigment, sondern ein Titandioxid-Pigmentgemisch aus den beiden Pigmenttypen, Laminatpigment und Dispersionsfarbenpigment, die oben genannte Aufgabe. Es wurde gefunden, dass die Zugabe eines speziell hoch nachbehandelten Pigments, einer Art "Boosterpigment", zu einem klassischen Laminatpigment zu einem Pigmentgemisch führt, mit dem die oben beschriebene, gewünschte Verbesserung der Opazität bei ausreichender Vergrauung, Helligkeit und Nassreißfestigkeit erreicht wird.

Die Aufgabe wird gelöst durch eine Titandioxid-Pigmentzusammensetzung enthaltend als Pigmenttyp (A) ein nachbehandeltes Pigment mit hoher Vergrauunsgsstabilität, wobei der Vergrauungswert CIELAB ΔL* (DIN6174) kleiner ist als 1,5 nach 96 Stunden Belichtung im Xenontest, und als Pigmenttyp (B) ein mit Si- und Al-Verbindungen in flockiger Auffällung anorganisch nachbehandeltes Pigment, wobei bei Pigmenttyp (B) der Al-Gehalt mindestens 2 Gew.-% (gerechnet als Al₂O₃) und der Si-Gehalt mindestens 3 Gew.-% (gerechnet als SiO₂) und die Summe aus SiO₂ und Al₂O₃ mindestens 7 Gew.-% (jeweils bezogen auf den Grundkörper) beträgt

Die Erfindung betrifft eine Mischung eines Pigments mit hoher Vergrauungsstabilität, eines typischen Laminatpigments (Pigmenttyp A), mit einem besonderen Dispersionsfarbenpigment (Pigmenttyp B), das durch einen erhöhten SiO₂- und Al₂O₃-Gehalt in flockiger Auffällung gekennzeichnet ist.

Es werden damit verbesserte Werte hinsichtlich Opazität bei ausreichender Vergrauung, Helligkeit und Nassreißfestigkeit erreicht. Aus der Anhebung der Opazität bei gleicher TiO₂-Einsatzmenge bzw. der Möglichkeit, eine unveränderte Opazität mit reduziertem TiO₂-Pigmenteinsatz zu erzielen, ergeben sich sowohl technische als auch wirtschaftliche Vorteile.

Weitere vorteilhafte Ausgestaltungen sind in den Unteransprüchen beschrieben. Die Erfindung ist im Folgenden weiter beispielhaft erläutert.

Als Pigmenttyp A kommen nachbehandelte Titandioxd-Pigmente in Frage, deren Grundkörper nach dem Sulfat(SP)- oder Chlorid(CP)-Verfahren hergestellt sein können und die bevorzugt Rutilstruktur haben. Der Grundkörper muss nicht stabilisiert sein, jedoch ist eine spezielle Stabilisierung bevorzugt: beim CP-Grundkörper durch eine Al-Dotierung von 0,3 - 3,0 Gew.-% (gerechnet als Al₂O₃) und einen Sauerstoffüberschuss in der Gasphase bei der Oxidation des Titantetrachlorids zu Titandioxid von mindestens 2 %; beim SP-Grundkörper durch eine Dotierung z. B. mit Al, Sb, Nb oder Zn (um eine hinreichend hohe Helligkeit zu erhalten, ist eine "leichte" Stabilisierung mit Al bevorzugt bzw. bei höheren Al-Dotierungsmengen eine Kompensation mit Antimon).

Die Pigmente sind typischerweise mit Al-, P- und/oder Si-Verbindungen anorganisch nachbehandelt. Eine zusätzliche Nachbehandlung mit Cer- und/oder Nitrat- und/oder Zinkverbindungen dient ebenso wie eine Temperung bei Temperaturen zwischen 200 und 700 °C, bevorzugt 400 bis 600 °C, der Verbesserung der Laminatvergrauungsstabilität.

Der Pigmenttyp A wird durch seinen Lichtechtheitswert, beurteilt im Laminat, charakterisiert. Der Vergrauungswert CIELAB ΔL* (DIN 6174) ist kleiner 1,5 nach 96 Stunden Belichtung im Xenotest bzw. auf der Blauen Wollskala (ISO 4586-2) ist die Stufe größer 6.

Pigmente mit hoher Vergrauungsstabilität (Pigmenttyp A) sind im Handel beispielsweise unter der Typenbezeichnung KRONOS^{®} 2080, 2081, 2084 und 2087 erhältlich.

Als Pigmenttyp B kommen nachbehandelte Titandioxid-Pigmente in Frage, deren Grundkörper nach dem SP- oder CP-Verfahren hergestellt sein können und die bevorzugt Rutilstruktur haben. Bevorzugt ist der Grundkörper auch stabilisiert: beim CP-Grundkörper durch eine Al-Dotierung von 0,3 - 3,0 Gew.-% (gerechnet als Al₂O₃) und einen Sauerstoffüberschuss bei der Gasphasenoxidation des TiCl₄ zu TiO₂ von 2 bis 15 %; beim SP-Grundkörper durch eine Dotierung z. B. mit Al, Sb, Nb oder Zn (um eine hinreichend hohe Helligkeit zu erhalten, ist eine "leichte" Stabilisierung mit Al bevorzugt bzw. bei höheren Al-Dotierungsmengen eine Kompensation mit Antimon).

Der Pigmenttyp B ist relativ hoch mit Al- und Si-Verbindungen anorganisch nachbehandelt, der Al-Gehalt (gerechnet als Al₂O₃) beträgt mindestens 2 Gew.-%, der Si-Gehalt (gerechnet als SiO₂) mindestens 3 Gew.-%, wobei die Summe der Si- und Al-Anteile (gerechnet als Oxid) mindestens 7 Gew.-% beträgt.

Ein besonderes Kennzeichen des Pigmenttyps B ist erfindungsgemäß die flockige, lockere Ausbildung der anorganischen Nachbehandlungshülle auf dem Grundkörper. Es wird eine möglichst voluminöse, poröse, flockige, lockere, "fluffy" Beschichtung (z. B. beschrieben in US 3 510 335) angestrebt, gewissermaßen das Gegenteil einer "dense-skin-Behandlung" (z. B. beschrieben in US 2 885 366). Bei einer dense-skin-Behandlung soll die Nachbehandlungshülle die TiO₂-Partikel möglichst lückenlos umfassen, um den unerwünschten photokatalytischen Effekt des TiO₂-Pigments auf die Umgebungsmatrix zu reduzieren. Die Flockigkeit der Oxid- bzw. Oxihydratschicht bei dem Pigmenttyp B bewirkt dagegen eine Verbesserung der Pigmentverteilung in einer Matrix und trägt entscheidend zur Opazitätserhöhung bei. Die locker ausgefällte anorganische Oxid- bzw. Oxihydratschicht auf dem TiO₂-Kern wirkt wie ein Abstandshalter zwischen den Streupartikeln.

Der Pigmenttyp B kann auch durch Eigenschaftswerte charakterisiert werden. Dazu eignen sich Größen, die von der "Unebenheit" bzw. der Geschlossenheit der Nachbehandlungshülle beeinflusst werden. Ein Maß der Unebenheit ist beispielsweise die Ölzahl oder die spezifische Oberfläche; ein Maß für die unvollständige Abdeckung ist beispielsweise die H₂SO₄-Löslichkeit (das Pigment wird in konzentrierter Schwefelsäure dispergiert und die Suspension eine Stunde bei 175 °C gehalten; nach Filtration wird im Filtrat das lösliche TiO₂ bestimmt) des Pigments: Der Pigmenttyp B gemäß der Erfindung hat eine erhöhte Ölzahl (mindestens 25) oder eine relativ hohe H₂SO₄-Löslichkeit (mindestens 15 % TiO₂ gelöst).

Die Pigmentmischung gemäß der Erfindung kann auch durch Eigenschaftswerte, beurteilt im Laminat, charakterisiert werden:

Die folgenden Werte beziehen sich auf Papiere mit einem Aschegehalt von 40 ± 1% und einem Flächengewicht von 100 ± 1 g/m²
a) Opazität
   i) CIELAB L* schwarz ≥ 90,0
   ii) Opazitätswert L ≥ 90,7
b) Lichtstabilität
   i) Blaue Wollskala: Stufe > 6
   ii) CIELAB ΔL* < 2,0

Mit einem erfindungsgemäßen Pigmentgemisch wird eine Nassbruchlast eines Papiers (hergestellt am Laborblattbildner) von mindestens 3,7 N erreicht.

Alle Anforderungen aus dem Laminatbereich werden durch das erfindungsgemäße Pigmentgemisch erfüllt.

Weitere vorteilhafte Verbesserungen für den Pigmenttyp B, besonders hinsichtlich der Laminatvergrauungsstabilität, sind insbesondere durch die nachfolgenden Maßnahmen möglich:
a) Zusätzliche Zugaben von Cer, Zink- oder Nitratverbindungen während der Nachbehandlung, oder im Falle von Nitrat besonders bevorzugt zur Filterpaste vor der Trocknung. Ebenso ist die Zugabe von Nitratverbindungen während der abschließenden Mahlung des Pigments möglich.
b) Vor der Nachbehandlung, die im Sinne dieser Erfindung zu der lockeren "fluffy" Nachbehandlungshülle aus SiO₂ und Al₂O₃ führt, eine erste Nachbehandlung, die derjenigen vom Pigmenttyp A entspricht.

### Beispiele für Pigmenttypen A und B (Tabelle 1)

### Pigment A1

Nach dem CP-Verfahren hergestelltes, mit 5,5 - 7,5 Gew.-% * einer Aluminiumverbindung (gerechnet als Al₂O₃), 1,0 - 3,0 Gew.-% einer Phosphorverbindung (gerechnet als P₂O₅) und zusätzlich mit 0,18 - 0,24 Gew.-% eines Nitrat nachbehandeltes Rutilpigment; die Eigenschaftswerte sind in Tabelle 1 zusammengefasst. Ein ähnliches typisches "Laminatpigment" ist beispielsweise unter der Bezeichnung KRONOS^{®} 2080 im Handel.
* alle Gewichtsprozentangaben für Nachbehandlungssubstanzen beziehen sich in den Beispielen auf den eingesetzten Grundkörper

### Pigment B1

Pigment auf der Basis eines nicht speziell stabilisierten nach dem SP-Verfahren hergestellten Grundkörpers mit Rutilstruktur. Das Pigment ist verhältnismäßig hoch anorganisch nachbehandelt, wobei durch eine geeignete Verfahrensführung (Herstellung einer gemahlenen Slurry bei pH-Wert 10,5; Zugabe von 2,5 Gew.-% H₂SO₄; und 5,1 Gew.-% SiO₂ in Form von Natriumsilikatlösung in 30 Minuten; weitere pH-Absenkung nach 30 Minuten Retentionszeit durch 2,5 Gew.-% H₂SO₄; Zugabe von 5,1 Gew.-% SiO₂ in Form von Natriumsilikatlösung; nach 30 Minuten Rühren Zugabe von 2,3 Gew.-% Al₂O₃ in Form von Aluminiumsulfatlösung in 45 Minuten und 90 Minuten Rühren; nochmalige Zugabe von 2,9 Gew.-% Al₂O₃ in Form von Natriumaluminatlösung; nach 60 Minuten Retentionszeit folgt Waschung und Trocknung) eine flockige Auffällung der Oxidschicht erreicht wird. Eigenschaftswerte sind in der Tabelle 1 angegeben.

### Pigment B2

Pigment auf der Basis eines nicht speziell stabilisierten, gemahlenen Grundkörpers mit Rutilstruktur wie in Pigment B1. Flockige Auffällung durch Zugabe von 3,2 Gew.-% H₂SO₄ in 30 Minuten und danach 3,2 Gew.-% SiO₂ in Form von Natriumsilikatlösung in 30 Minuten; anschließend wird 3,5 Gew.-% Al₂O₃ in Form von Natriumaluminat-Lösung zugegeben und danach 30 Minuten gerührt; danach werden 2,0 Gew.-% Al₂O₃ in Form von Aluminiumsulfat-Lösung zugegeben und die Suspension nach einer Retentionszeit von 60 Minuten filtriert. Die weitere Behandlung erfolgt wie bei Pigment B1; B2 liegt hinsichtlich "Flockigkeit" an der unteren Grenze des Pigmenttyps B.

### Pigment B3

Pigment auf der Basis eines mit 0,01 Gew.-% Al (gerechnet als Al₂O₃) stabilisierten SP-Grundkörpers. Nachbehandlung in 15 Minuten mit 1,0 Gew.-% als P₂O₅ in Form von Dinatriumhydrogenphosphatlösung, in 10 Minuten mit 1,6 Gew.-% Al₂O₃ in Form von Aluminiumsulfatlösung und in 4 Minuten 1,4 Gew.-% Al₂O₃ in Form von Natriumaluminatlösung. Nach der Einstellung des pH-Wertes auf 4 mit H₂SO₄ in 30 Minuten, Zugabe von 3,0 Gew.-% SiO₂ in Form von Natriumsilikatlösung zusammen mit Aluminiumsulfatlösung (100 g Al₂O₃) in einer Menge, dass der pH von 4 konstant bleibt, sowie folgend Zugabe in 12 Minuten 4,7 Gew.-% Al₂O₃ in Form von Natriumaluminatlösung und danach nochmals in 15 Minuten von 2,2 Gew.-% Al₂O₃ in Form von Aluminiumsulfatlösung. Eigenschaftswerte siehe Tabelle 1.

### Pigment B4

Pigment auf der Basis eines mit 0,6 Gew.-% Al (gerechnet als Al₂O₃) stabilisierten SP-Grundkörpers; es wird wie unter B1 beschrieben, gemahlen, nachbehandelt und nach Zugabe von 0,4 Gew.-% Nitrat in Form von Natriumnitrat zur Filterpaste getrocknet und gemahlen; Eigenschaftswerte siehe Tabelle 1.

### Pigment B5

Pigment auf der Basis eines mit 0,6 Gew.-% Al (gerechnet als Al₂O₃) stabilisierten SP-Grundkörpers. Es wird nach Mahlung angeteigt und der pH-Wert durch 1,9 Gew.-% H₂SO₄ abgesenkt. Zugabe in 20 Minuten von 3,8 Gew.-% SiO₂ in Form von Natriumsilikatlösung, nach 10 Minuten Retentionszeit Zugabe von 1,9 Gew.-% H₂SO₄ zur Absenkung des pH-Wertes; erneute Zugabe von 3,8 Gew.-% SiO₂ in Form von Natriumsilikat; nach 10 Minuten Rührdauer Zugabe von 2,0 Gew.-% Al₂O₃ in Form von Aluminiumsulfatlösung in 10 Minuten, danach Zugabe von 3,2 Gew.-% Al₂O₃ in der Form von Natriumaluminat; nach 60 Minuten Retentionszeit Filtration, Waschung, Trocknung, Mahlung.

### Pigment B6

Pigment auf der Basis eines mit 0,6 Gew.-% Al (gerechnet als Al₂O₃) stabilisierten SP-Grundkörpers. Es wird nach Nassmahlung angeteigt und der pH-Wert durch 2,9 Gew.-% H₂SO₄ abgesenkt; in 30 Minuten Zugabe von 6,0 Gew.-% SiO₂ in Form von Natriumsilikatlösung; 10 Minuten Retentionszeit; Zugabe von 0,7 Gew.-% Al₂O₃ in Form von Aluminiumsulfatlösung in 5 Minuten, danach 3,7 Gew.-% Al₂O₃ in Form von Natriumaluminatlösung und anschließend weitere 1,1 Gew.-% Al₂O₃ in Form von Aluminiumsulfatlösung, dazwischen wird jeweils 10 Minuten gerüht. Die weitere Verarbeitung wie in B5.

### Pigment B7

Dieses Pigment unterscheidet sich von Pigment B6 nur in der Höhe der Nachbehandlungssubstanzen. Die Mengen sind:
- 4,7 % H₂SO₄
- 9,0 % SiO₂ als Natriumsilikat in 45 Minuten
- 0,7 % Al₂O₃ als Aluminiumsulfat
- 3,8 % Al₂O₃ als Natriumaluminat
- 0,9 % Al₂O₃ als Aluminiumsulfat
Alle anderen Verfahrensschritte sind vergleichbar.

In der Tabelle 1 sind typische Werte zusammengestellt. Im Gegensatz zu einem Standard-Laminatpigment (Pigmenttyp A) sind Ölzahl, H₂SO₄-Löslichkeit, BET-Oberfläche höher.

Die Pigmente B1 bis B7 erfüllen zwar die geforderten Werte für die Opazität, hier ausgedrückt durch die Werte CIELAB L* schwarz und Opazitätswert L, jedoch ist die Vergrauungsstabilität im Laminat sowie bei Pigment B2 auch die Nassreißfestigkeit im Papier unzureichend.

### Beurteilung der Pigmente bzw. der Pigmentgemische in Laminaten

### a) Laminatherstellung (Labormaßstab)

Es wird eine 36,5 %ige, wässrige Pigmentsuspension aus 146 g Titandioxid-Pigment (bzw. Pigmentgemisch) und 254 g Leitungswasser hergestellt. Es werden 30 g Zellstoff (ofentrocken) für die Testung zugrunde gelegt. Die entsprechende Menge Pigmentsuspension wird an die Retention und den gewünschten Aschegehalt, hier 40 % ± 1, bzw. das Flächengewicht, hier 100 g/m² ± 1, angepasst. Die Vorgehensweise und die eingesetzten Hilfsstoffe sind dem Fachmann bekannt. Das zu beharzende Blatt wird in eine Harzlösung eingetaucht und für 25 Sekunden im Umlufttrockenschrank bei 130 °C vorkondensiert. Ähnlich erfolgt eine zweite Imprägnierung. Die Harzlösung beträgt 129 - 140 % des Flächengewichts. Das Blatt hat eine Restfeuchte von 4 - 6 Gew.-%. Die kondensierten Blätter werden mit Phenolharz getränkten Kernpapieren, weißem und schwarzem Underlay Papier zu Presspaketen zusammengelegt.
Bei dem Versuch bestand der Laminataufbau aus 9 Schichten: Papier, Papier, Kernpapier, Kernpapier, Gegenzug aus schwarzem Underlay, Kernpapier, Kernpapier, schwarz/weißes Underlay, Papier.
Das Pressen der Pakete erfolgt mit Hilfe einer Wickert^{®} Laminat-Presse Typ 2742 bei einer Temperatur von 140 °C und einem Druck von 90 bar für eine Presszeit von 300 Sekunden.

### b) Opazität

Die Opazität ist ein Maß für die Lichtdurchlässigkeit oder Transmission des Papiers. Als Maß der Opazität der Laminate werden gewählt:
i) CIELAB L* schwarz, die Helligkeit der Laminate gemessen über schwarzem Underlay-Papier.
ii) Opazitätswert L [%] = Y schwarz / Y weiß .100 ermittelt aus dem Y-Wert gemessen über schwarzem Underlay-Papier (Y schwarz) und dem Y-Wert gemessen über weißem Underlay-Papier (Y_{weiß}).

Die Werte werden mit einem Spektralphotometer (ELREPHO 3300) ermittelt.

### c) Lichtechtheit

Zur Beurteilung der Vergrauungsstabilität (Lichtechtheit) der Titandioxid-Pigmente bzw. Pigmentmischungen werden die entsprechenden Laminatmuster in einem XENOTEST 150S belichtet. Für die Beurteilung wird die Seite des Laminats, auf der zwei Papiere miteinander verpresst werden, gemessen.
i) Vergrauung CIELAB ΔL*
   Es werden die Helligkeit CIELAB L* nach DIN 6174 vor und nach einer Dauer von 96 Stunden Belichtung im Xenotest gemessen. Die Lichtquelle ist eine Xenon-Bogen-Lampe. Die Temperatur im Innenraum des Gerätes liegt bei 23 ± 3 °C, die relative Feuchte bei 65 ± 5 %. Die Proben werden im "Wendelauf" belichtet.
ii) Blaue Wollskala
   Es wird in Anlehnung an ISO 4586-2 (1995) mit Hilfe der "Blauen Wollskala" die Lichtechtheit beurteilt.

### d) Nassbruchlast

Zur Beurteilung der Nassreißfestigkeit der Papiere werden diese zunächst 24 Stunden bei 105 °C gelagert ("gereift"). Prüfstreifen von 15 mm Breite werden 5 Minuten in destilliertem Wasser gewässert. Anschließend werden die nassen Streifen mit Hilfe einer Zugprüfmaschine auf ihre Nassbruchlast geprüft. Die Nassreißfestigkeit wird in Newton angegeben.

### e) Farbwertbestimmung:

Die Farbwerte (CIELAB L*, -a*, -b*) werden nach DIN 6174 mit Hilfe des ELREPHO^{®} 3300-Farbmeßgerätes bestimmt. Es wird auf der Seite des Laminats, auf der zwei Papiere miteinander verpresst wurden, gemessen.

### Charakteristische anwendungstechnische Werte für Einzelpigmente und Pigmentgemische (Tabelle 2)

### Versuch 1 (Standard-Laminatpigment), nur Pigment A1

Das Pigment A1, vergleichbar KRONOS^{®} 2080, wird pur eingesetzt. Die Herstellung der Laminate erfolgt gemäß der zuvor beschriebenen Testmethode. Es werden jeweils Papiere mit 40 % Asche und 100 g/m² Flächengewicht hergestellt. Um den Aschegehalt einzustellen, wird beim jeweiligen Versuch die notwendige Menge TiO₂-Suspension zur Pulpe zugesetzt. Das angestrebte Flächengewicht von 100 g/m² wird über die Menge Pigment-Zellstoffsuspension eingestellt.

Die jeweils eingesetzten Mengen TiO₂-Suspension sowie die Menge Pigment-Zellstoff-Suspension sind in Tabelle 2 aufgeführt.

### Versuch 2 (Standard-Dispersionsfarbenpigment), nur Pigment B1

Das Versuchspigment B1, das einem Standard-Dispersionsfarbenpigment entspricht, wird zu 100 % eingesetzt. Die Ergebnisse von Versuch 2 sind in Tabelle 2 aufgeführt. Das Pigment B1 zeigt eine hervorragende Opazität im Vergleich zu A1. Die Vergrauungsstabilität ist aber niedrig und nicht akzeptabel. Die Blätter zeigten außerdem eine sehr schlechte Nassreißfestigkeit, d. h. sie waren sehr weich und zerrissen leicht während der Imprägnierung.

### Versuch 3 (Standard-Dispersionsfarbenpigment), nur Pigment B2

Das Pigment B2 ist ein im Vergleich zum Pigment B1 weniger hoch oberflächenbehandeltes Standard-Dispersionsfarbenpigment. Das Pigment wird pur eingesetzt. Die Ergebnisse von Versuch 3 sind in Tabelle 2 aufgeführt. Laminate mit dem Pigment B2 zeigen eine deutlich höhere Opazität verglichen mit Pigment A1 als Standard, sind aber weniger gut im Vergleich zu Pigment B1. Auch Pigment B2 zeigt eine nicht ausreichende Vergrauungsstabilität. Es gibt keine Nachteile bezüglich der Nassreißfestigkeit.

### Versuch 4 (Gemisch A1 / B2)

In diesem Versuch wird eine Pigmentmischung bestehend aus 70 Gew.-% Pigment A1 und 30 Gew.-% Pigment B2 eingesetzt. Die Ergebnisse von Versuch 4 sind in Tabelle 2 aufgeführt. Dieses Laminat mit einem 70 : 30 Pigmentgemisch zeigt eine verbesserte Opazität im Vergleich zu Versuch 1. Die Vergrauungsstabilität ist noch akzeptabel.

### Versuch 5 (Gemisch A1 / B3)

In diesem Versuch wird eine Pigmentmischung bestehend aus 70 Gew.-% A1 und 30 Gew.-% B3 eingesetzt. Letzteres basiert auf einem hellen, leicht stabilisierten Grundkörper mit einer "klassischen Laminatpigment-" und einer zusätzlichen "Dispersionsfarbenpigment-Nachbehandlung". Die Ergebnisse von Versuch 5 sind in Tabelle 2 aufgeführt. Das oben genannte Pigmentgemisch führt zu Laminaten mit deutlich verbesserter Opazität im Vergleich zu Versuch 1, die Vergrauungsstabilität liegt auf einem akzeptablen Niveau.

### Versuch 6 (Gemisch A1 / B4)

In diesem Versuch wird eine Pigmentmischung bestehend aus 70 Gew.-% Pigment A1 und 30 Gew.-% Pigment B4 eingesetzt. Pigment B4 ist ähnlich oberflächenbehandelt wie Pigment B1, allerdings mit einem hochstabilisierten Grundkörper hergestellt. Die Ergebnisse sind in Tabelle 2 aufgeführt. Es ist erkennbar, dass der Übergang zu einem hochstabilisierten Grundkörper die Vergrauungstabilität deutlich verbessert. Die Laminate zeigen eine deutlich verbesserte Opazität im Vergleich zu Versuch 1. Die Nassreißfestigkeit der Papiere ist niedriger als bei reinem A1, aber auf einem akzeptablen Niveau.

### Versuch 7 (Gemisch A1 / B5)

In diesem Versuch wird eine Pigmentmischung bestehend aus 70 Gew.-% Pigment A1 und 30 Gew.-% Pigment B5 eingesetzt. Letzeres ist ein Pigment ähnlich oberflächenbehandelt wie Pigment B4, allerdings mit ca. 25 % weniger SiO₂-Oberflächenbehandlung hergestellt. Die Ergebnisse von Versuch 7 sind in Tabelle 2 aufgeführt. Diese Mischung zeigt wegen der geringeren SiO₂ Oberflächenbehandlung von B5 im Vergleich zu B4 gegenüber Versuch 6 eine schlechtere Opazität bei vergleichbarer Vergrauungsstabilität.

### Versuch 8 (Gemisch A1 / B6)

In diesem Versuch wird eine Pigmentmischung bestehend aus 70 Gew.-% Pigment A1 und 30 Gew.-% Pigment B6 eingesetzt. Pigment B6 ist ähnlich oberflächenbehandelt wie Pigment B2, allerdings mit der doppelten Menge SiO₂. Es wird der hochstabilisierte Grundkörper wie bei B4 eingesetzt. Die Ergebnisse von Versuch 8 sind in Tabelle 2 aufgeführt. Die Opazität des Laminatmusters mit diesem Pigmentgemisch liegt deutlich über der mit reinem A1. Die Nassreißfestigkeit ist ausreichend, die Vergrauungsstabilität ist gut.

### Versuch 9 (Gemisch A1 / B7)

In diesem Versuch wird eine Pigmentmischung bestehend aus 70 Gew.-% Pigment A1 und 30 Gew.-% Pigment B7 eingesetzt. Letzteres Pigment ist ähnlich oberflächenbehandelt wie Pigment B6. Die Ergebnisse von Versuch 9 sind in Tabelle 2 aufgeführt. Dieses Pigmentgemisch führt auf Grund einer gegenüber Versuch 8 erhöhten SiO₂-Menge zu einem Laminat mit höchsten Opazitätswerten, deutlich höher im Vergleich zu reinem Pigment A1. Die Vergrauungsstabilität liegt auf einem guten Niveau. Die Nassreißfestigkeit der Papiere mit o. g. Pigmentmischung ist tolerierbar an der oberen Grenze.

Es werden Titandioxid-Pigmentzusammensetzungen bevorzugt, bei denen der Anteil des Pigmenttyps B 10 bis 90 Gew.-%, besonders bevorzugt 30 bis 50 Gew.-%, an der Pigmentmischung beträgt.

**Tabelle 1**

| **Pigment** | **A1** | **B1** | **B2** | **B3** | **B4** | **B5** | **B6** | **B7** |
|---|---|---|---|---|---|---|---|---|
| **Al₂O₃-Nachbehandlungsmenge (% bez. auf Grundkörper** | 6,5 | 5,2 | 5,5 | 10,2 | 5,2 | 5,2 | 5,5 | 5,4 |
| **SiO₂-Nachbehandlungsmenge (% bez. auf Grundkörper)** | < 0,01 | 10,2 | 3,2 | 3,0 | 10,2 | 7,6 | 6,0 | 9,0 |
| **Ölzahl (g/100 g)** | 18 | 40 | 26 | 29 | 41 | 49 | 35 | 34 |
| **H₂SO₄-Löslichkeit (%-TiO₂ gelöst)** | 15 | 19 | 16 | 23 | 19 | 19 | 18 | 19 |
| **BET-Oberfläche (m²/g)** | 9 | 49 | 29 | 34 | 45 | 45 | 40 | 53 |

**Tabelle 2**

| **Versuch** | **1** | **2** | **3** | **4** | **5** | **6** | **7** | **8** | **9** |
|---|---|---|---|---|---|---|---|---|---|
| **Pigmentgemisch (in %)** | **A1 : 100** | **-** | **-** | **A1 : 70** | **A1 : 70** | **A1 : 70** | **A1 : 70** | **A1 : 70** | **A1 : 70** |
| | **-** | **B1:100** | **B2:100** | **B2:30** | **B3:30** | **B4:30** | **B5:30** | **B6:30** | **B7:30** |
| **Eingesetzte TiO₂-Suspension [g]** | 120 | 120 | 100 | 115 | 105 | 105 | 99 | 106 | 112 |
| **Pigment-Zellstoff-Suspension [g]** | 425 | 430 | 435 | 423 | 440 | 425 | 430 | 420 | 423 |
| **Opazität (Laminat) CIELAB L* schwarz** | 90,0 | 91,4 | 90,8 | 90,2 | 90,4 | 90,6 | 90,5 | 90,5 | 90,9 |
| **Opazitätswert L** | 90,7 | 94,3 | 93,4 | 91,5 | 91,9 | 92,5 | 92,9 | 92 | 92,8 |
| **Vergrauung (Laminat) ΔL*** | 0,9 | 4,5 | 6,9 | 2,0 | 1,5 | 1,2 | 1,3 | 1,3 | 1,3 |
| **Blaue Wollskala [Stufe]** | > 6,0 | < 6,0 | < 6,0 | > 6,0 | > 6,0 | > 6,0 | > 6,0 | > 6,0 | > 6,0 |
| **Nassbruchkraft [N]** | 5,5 | 2,3 | 4,1 | 4,6 | 4,4 | 4,1 | 3,8 | 4,8 | 3,7 |
| **Optik (Laminat)** | | | | | | | | | |
| **CIELAB L* weiß** | 93,4 | 93,8 | 93,3 | 93,3 | 93,4 | 93,4 | 93,3 | 93,2 | 93,7 |
| **CEELAB a* _{weiß}** | -1,4 | -1,3 | -1,4 | -1,4 | -1,3 | -1,3 | -1,4 | -1,4 | -1,3 |
| **CIELAB b* _{weiß}** | 2,2 | 2,8 | 3,2 | 2,6 | 2,5 | 2,6 | 2,8 | 2,7 | 2,6 |

## Patentansprüche

1. Titandioxid-Pigmentzusammensetzung enthaltend
als Pigmenttyp (A) ein nachbehandeltes Pigment mit hoher Vergrauungsstabilität,
wobei der Vergrauungswert CIELAB ΔL* (DIN6174) kleiner ist als 1,5 nach 96 Stunden Belichtung im Xenontest, und
als Pigmenttyp (B) ein mit Si- und Al-Verbindungen in flockiger Auffällung anorganisch nachbehandeltes Pigment
wobei bei Pigmenttyp (B) der Al-Gehalt mindestens 2 Gew.-% (gerechnet als Al₂O₃) und der Si-Gehalt mindestens 3 Gew.-% (gerechnet als SiO₂) und die Summe aus SiO₂ und Al₂O₃ mindestens 7 Gew.% (jeweils bezogen auf den Grundkörper) beträgt.

2. Titandioxid-Pigmentzusammensetzung nach Anspruch 1 **dadurch gekennzeichnet, dass**
der Pigmenttyp (B)
entweder einen Rutil-Grundkörper aus dem Chlorid-Verfahren aufweist, der mit Al in Höhe von 0,3 bis 3,0 Gew.-% (gerechnet als Al₂O₃) dotiert und mit einem Sauerstoffüberschuss bei der Gasphasenoxidation des TiCl₄ zu TiO₂ von 2 bis 15 % hergestellt ist
oder einen Rutil-Grundkörper aus dem Sulfat-Verfahren aufweist, der mit Al, Sb, Nb oder Zn dotiert ist.

3. Titandioxid-Pigmentzusammensetzung nach Anspruch 1 oder 2 **dadurch**
**gekennzeichnet, dass**
der Pigmenttyp (B) einen mit bis 1 Gew.-% Al (gerechnet als Al₂O₃) dotierten , nach dem Sulfat-Verfahren hergestellten Grundkörper aufweist.

4. Titandioxid-Pigmentzusammensetzung nach einem oder mehreren der Ansprüche 1 bis 3 **dadurch gekennzeichnet, dass**
der Pigmenttyp (B) unmittelbar auf den Grundkörper zunächst mit Aluminiumphosphat beschichtet ist.

5. Titandioxid-Pigmentzusammensetzung nach einem oder mehreren der Ansprüche 1 bis 4 **dadurch gekennzeichnet, dass**
der Pigmenttyp (B) zusätzlich noch mit Ce bis 0,2 Gew.-% (gerechnet als CeO₂) und/oder mit Zn bis 2,5 Gew.-% (gerechnet als ZnO) beschichtet ist.

6. Titandioxid-Pigmentzusammensetzung nach einem oder mehreren der Ansprüche 1 bis 5 **dadurch gekennzeichnet, dass**
der Pigmenttyp (B) einen Nitratgehalt bis 1 Gew.-% (bezogen auf den Grundkörper) aufweist und/oder einer Temperung bis 500°C unterzogen wird.

7. Titandioxid-Pigmentzusammensetzung nach einem oder mehreren der Ansprüche 1 bis 6 **dadurch gekennzeichnet, dass**
der Anteil des Pigmenttyps (B) an der Pigmentmischung 10 bis 90 Gew.% bevorzugt 30 bis 50 Gew.% beträgt.

## Claims

1. Titanium dioxide pigment composition containing,
as pigment type (A), a post-treated pigment with high greying resistance, where the greying value CIELAB ΔL* (DIN 6174) is less than 1.5 after 96 hours of exposure in the Xenotest, and,
as pigment type (B), a pigment inorganically post-treated with Si and Al compounds precipitated in flaky form,
where the Al content of pigment type (B) is at least 2% by weight (calculated as Al₂O₃), the Si content is at least 3% by weight (calculated as SiO₂) and the sum of SiO₂ and Al₂O₃ is at least 7% by weight (referred to the base material in each case).

2. Titanium dioxide pigment composition according to Claim 1, **characterised in that** pigment type (B)
either displays a rutile base material from the chloride process that is doped with Al to a level of 0.3 to 3.0% by weight (calculated as Al₂O₃) and manufactured with an oxygen excess of 2 to 15% during gas-phase oxidation of the TiCl₄ into TiO₂,
or displays a rutile base material from the sulphate process that is doped with Al, Sb, Nb or Zn.

3. Titanium dioxide pigment composition according to Claim 1 or 2, **characterised in that**
pigment type (B) displays a base material that is manufactured by the sulphate process and doped with up to 1% by weight Al (calculated as Al₂O₃).

4. Titanium dioxide pigment composition according to one or more of Claims 1 to 3, **characterised in that**
pigment type (B) is initially coated with aluminium phosphate, applied directly to the base material.

5. Titanium dioxide pigment composition according to one or more of Claims 1 to 4, **characterised in that**
pigment type (B) is additionally coated with up to 0.2% by weight Ce (calculated as CeO₂) and/or with up to 2.5% by weight Zn (calculated as ZnO).

6. Titanium dioxide pigment composition according to one or more of Claims 1 to 5, **characterised in that**
pigment type (B) displays a nitrate content of up to 1% by weight (referred to the base material) and/or is subjected to tempering up to 500 °C.

7. Titanium dioxide pigment composition according to one or more of Claims 1 to 6, **characterised in that**
the proportion of pigment type (B) relative to the pigment mixture is 10 to 90% by weight, preferably 30 to 50% by weight.

## Revendications

1. Composition de pigment au dioxyde de titane, contenant
comme pigment de type (A), un pigment retraité, avec une stabilité élevée au grisage, où la valeur de grisage CIELAB ΔL* (DIN6174) est inférieure à 1,5 après 96 heures d'illumination dans le test au xénon, et
comme pigment de type (B), un pigment inorganique retraité, avec des composés Si et Al en précipitation floconneuse,
où pour le pigment de type (B), la teneur en Al se situe à au moins 2% en poids (calculée comme Al₂O₃), et la teneur en Si se situe à au moins 3% en poids (calculée comme SiO₂) et la somme de SiO₂ et Al₂O₃ s'élève à au moins 7% en poids (chaque fois par rapport au corps de base).

2. Composition de pigment au dioxyde de titane selon la revendication 1, **caractérisée en ce que**
le pigment de type (B)
présente un corps de base de type rutile obtenu par le procédé au chlorure, qui est dopé avec Al à hauteur de 0,3 à 3,0% en poids (calculé comme Al₂O₃) et qui est préparé avec un excès d'oxygène allant de 2 à 15% lors de l'oxydation en phase gazeuse du TiCl₄ en TiO₂
ou un corps de base de type rutile obtenu par le procédé au sulfate, qui est dopé de Al, Sb, Nb ou Zn.

3. Composition de pigment au dioxyde de titane selon la revendication 1 ou 2, **caractérisée en ce que**
le pigment de type (B) présente un corps de base préparé par le procédé au sulfate, dopé de jusqu'à 1% en poids de Al (calculé comme Al₂O₃).

4. Composition de pigment au dioxyde de titane selon l'une ou plusieurs des revendications 1 à 3, **caractérisée en ce que**
le pigment de type (B) est revêtu d'abord avec du phosphate d'aluminium, directement sur le corps de base.

5. Composition de pigment au dioxyde de titane selon l'une ou plusieurs des revendications 1 à 4, **caractérisée en ce que**
le pigment de type (B) est revêtu en outre, de Ce à jusqu'à 0,2% en poids (calculé comme CeO₂) et/ou de Zn à jusqu'à 2,5% en poids (calculé comme ZnO).

6. Composition de pigment au dioxyde de titane selon l'une ou plusieurs des revendications 1 à 5, **caractérisée en ce que**
le pigment de type (B) présente une teneur en nitrate de jusqu'à 1% en poids (par rapport au corps de base) et/ou est soumis à une équilibration à une température de jusqu'à 500°C.

7. Composition de pigment au dioxyde de titane selon l'une ou plusieurs des revendications 1 à 6, **caractérisée en ce que**
la quantité du pigment de type (B) se situe dans l'intervalle allant de 10 à 90% en poids, de préférence de 30 à 50% en poids du mélange de pigment.
